# EUROPEAN PATENT SPECIFICATION

(11) **EP 2 029 923 B1**
(45) Date of publication and mention of the grant of the patent: **20.04.2011**
(21) Application number: 07732954.8
(22) Date of filing: 24.05.2007
(51) Int. Cl.: F16K 33/00

(54) **FLOAT VALVE REGULATOR**
SCHWIMMERVENTILREGLER
RÉGULATEUR DE SOUPAPE À FLOTTEUR

(30) Priority: 24.05.2006 GB 0610304
(43) Date of publication of application: 04.03.2009
(73) Proprietor: Henson, Dennis Raymond, Upper Stoke Holy Cross Norwich NR14 8NG (GB)
(72) Inventor: Henson, Dennis Raymond, Upper Stoke Holy Cross Norwich NR14 8NG (GB)
(74) Representative: Flynn, Michael Joseph
(86) International application number: PCT/GB2007/001934
(87) International publication number: WO 2007/135443

(56) References cited:
- GB-A- 2 031 556
- GB-A- 2 302 394
- GB-A- 2 339 884

## Description

### Field of the Invention

The present invention relates to ball cock valve regulators and in particular to a modification to such regulators by which incoming liquid is diverted more or less into a reservoir forming part of the regulator and which allows such regulators to be used with so-called "equilibrium flow control valves".

### Background to the Invention

Float valves, commonly referred to as ball cocks valves, are well known and comprise a valve, a lever arm and a float (usually ball shaped). Their primary purpose is to automatically fill water tanks supplied under pressure from a source and to ensure sealing closure of the valve when the tank is full. Some of the well-appreciated disadvantages associated with these arrangements are that they open as soon as the level of water in the tank drops, are noisy, relatively slow in operation and take time to finally stop flowing.

In the description that follows, a reference to "water" is intended to indicate by example only one of a number of liquids that can be handled by the regulator of the invention. Similarly, a reference to a "tank" is intended to include any appropriate container or vessel into which a liquid may flow.

When only a small quantity of water is drawn from the container, the valve opens only slightly, causing water to trickle in, usually noisily. Additionally, the valve is very slow to close and may not seal properly. Various ways to overcome this problem have been proposed by using electrical valves, pressure vessels or complicated valve arrangements. Each of these known solutions need to be plumbed in and are relatively expensive. Electrical valves also need a constantly available power supply. Pressure vessels are bulky and require routine regular maintenance. Other known complicated valve arrangements need labour-intensive plumbing in and are relatively expensive.

United Kingdom Patent Publication No. GB 2 302 394 to the present Applicant describes a ball cock valve regulator having a configuration which delays the opening of an inlet valve to allow liquid into a container until the level of liquid in the container has dropped to a pre-determined level, well below the maximum level to which the regulator will allow the container to be filled when the valve is opened. This regulator works well with a British Standard BS Part 2 top discharge type of valve and stops the valve from opening when only small quantities of water are drawn from the tank. The regulator of GB 2 302 394 uses a catchpot configuration to open and shut the inlet valve relatively quickly, firmly and smoothly and thus it prevents "water hammer" and is of particular advantage when the water supply to the valve is pumped by a demand operated electric pump. However, the regulator described in GB 2 302 394 cannot be used with valves that have a discharge outlet located at the bottom of the valve. More particularly, with respect to the present application, the regulator of GB 2 302 394 cannot be used with so-called "Equilibrium Float Valves".

The problem encountered when trying to use this prior art type of regulator with equilibrium valves is that these valves have higher flow rates than the BS Type 2 valves.. One perceived disadvantage is that, in operation, all the liquid should discharge into the catchpot when the valve is partially open but only a restricted amount when the valve is at full bore. It has also been found necessary to discharge some of the liquid from the catchpot to prevent a buoyancy equilibrium situation from occurring when the valve is closing.

It is an object of the present invention to seek to alleviate the above disadvantages and to provide an improved ball cock valve regulator.

It is a particular object of the present invention to provide a modification to ball cock valve regulators so they can be used with so-called "equilibrium float valves".

### Summary of the Invention

Accordingly, the present invention providers a float valve regulator which is opened and closed by the movement of an float means secured at one end of a lever arm, the float means rising and falling in use with the level of liquid in a container into which a supply of liquid is controlled by the valve having a discharge outlet which directs incoming liquid into a catchpot mounted along the length of or otherwise forming part of said lever arm, the catchpot including a region which extends below the discharge outlet of the valve so that at least a portion of incoming liquid is directed into the catchpot to more rapidly open said valve and said catchpot includes draining means so that liquid retained therein can escape allowing the float means to move more rapidly to shut the valve securely when filling is complete, wherein the region of the catchpot extending below the discharge outlet includes an orifice, which aligns with the outlet when the float means falls sufficiently to commence valve opening but which moves increasingly out of alignment with the discharge outlet as the float means rises as the liquid level in the container rises.

Preferably the catchpot includes a siphon element positioned in a liquid collection portion thereof so that a siphon is established as the catchpot is carried to a particular angular position with the lever arm by the rise and fall of the float means, such that once established the siphon serves to extract liquid retained within the catchpot and allow it to flow into the container, thereby further raising the level of liquid in the container, lightening the catchpot and lever arm assembly and allowing the increased buoyancy effect of the float means to more rapidly and firmly close the valve.

Advantageously, the catchpot draining means comprises a draining orifice having a weir element disposed around at least part of the orifice which in use prevents incoming liquid falling adjacent the orifice from flowing directly therethrough and instead diverts a substantial proportion of such liquid into the liquid collection portion of the catchpot.

Conveniently the liquid collection portion of the catchpot includes one or more openings in at least one side wall of the catchpot through which liquid can escape, thereby setting a limit to the capacity of retained liquid therein.

In a preferred arrangement, the lever arm carries a float means comprising two buoyancy floats disposed in a substantially vertically spaced apart arrangement.

Advantageously, the float means is arranged so that, when the catchpot body is empty and the container is full, an upper buoyancy float is located at an upper liquid level and a lower buoyancy float is wholly submerged, whereby when the liquid level starts to drop the buoyancy of the upper and lower floats keeps the lever arm in a "valve closed" position for a predetermined interval until the level in the container is such that the lever arm drops and the valve opens, causing the catchpot to fill and forcing the lever arm downwardly to overcome the buoyancy effect of the lower float and open the valve yet further to fill the container.

Conveniently, the two floats are mounted on a support which extends generally perpendicularly from the end of the float arm and remote from the end thereof which is pivotally attached to or adjacent the valve or a valve body.

In one arrangement, the position of at least one of the floats is adjustable relative to the lever ann.

In a first construction the siphon element comprises at least one inverted U-tube, each having one end which extends through a base portion of the catchpot.

In another construction the catchpot extends substantially the full length of the lever arm and the siphon element has, at an end towards the valve, one end extending through a base portion of the catchpot and runs within the majority of the length of the catchpot before it bends down towards the float end of the catchpot, so as to be self-priming. This arrangement facilitates the use of large bore siphon tubes.

Conveniently, the catchpot includes a baffle which extends substantially across and defines one end of the liquid collection portion of the catchpot, the baffle including gaps and apertures which allow liquid to flow from one side of the baffle to the other but preventing a surge of liquid from the liquid collection portion towards the orifice as the buoyancy effect of the float means overcome the weight of liquid retained therein as the catchpot rises quickly after the siphoning action begins to extract liquid therefrom.

In a further aspect of the present invention there is provided a catchpot attachable to a float carrying lever arm of a downwardly discharging float-controlled equilibrium valve, the catchpot including an orifice in a region thereof which aligns with a discharge outlet of the valve when the lever arm has dropped to a level at which the valve will open but which moves increasingly out of alignment with the outlet as the lever arm rises towards a "valve closed" position, and which also includes a siphon tube having one end within the catchpot and remote from said orifice to establish a siphon to empty the catchpot when the lever ann approaches said "valve closed" position.

### Brief Description of the Drawings

The invention will now be described more particularly with reference to the accompanying drawings which show, by way of example only, one embodiment of improved ball cock valve regulator in accordance with the invention. In the drawings:
Figure 1A is a side view of an equilibrium valve fitted with a modified catchpot constructed in accordance with the invention and installed in a storage vessel or container;
Figures 1B and 1C are detailed top and bottom plan views, respectively, of a draining orifice in the catchpot base provided with a protective weir arranged to control water flow therethrough;
Figures 2A, 2B and 2C are enlarged views of the catchpot of Figure 1A and the weir and draining orifice of Figures 1B and 1C;
Figure 3 is a side elevation of the valve regulator of Figure 1A after an amount of water has been drawn off from a container and the valve begins to open;
Figure 4 shows an intermediate stage in the filling of the catchpot and container, where the weight of water in the catchpot drives the valve towards a more open position;
Figure 5 shows a full flow position where the catchpot is full and the draining orifice is in line with the discharge outlet of the valve;
Figure 6 shows the liquid flow as the floats starts to rise to shut off the valve;
Figure 7 shows the valve closing under the influence of the buoyancy floats as the container fills and the catchpot empties;
Figure 8 shows a full container, an emptied catchpot and the valve in its fully closed position; and
Figure 9 is a side elevation similar to that of Figure 1A, illustrating a ball cock valve regulator of the invention with a preferred construction of self-purging siphon.

### Detailed Description of the Preferred Embodiment

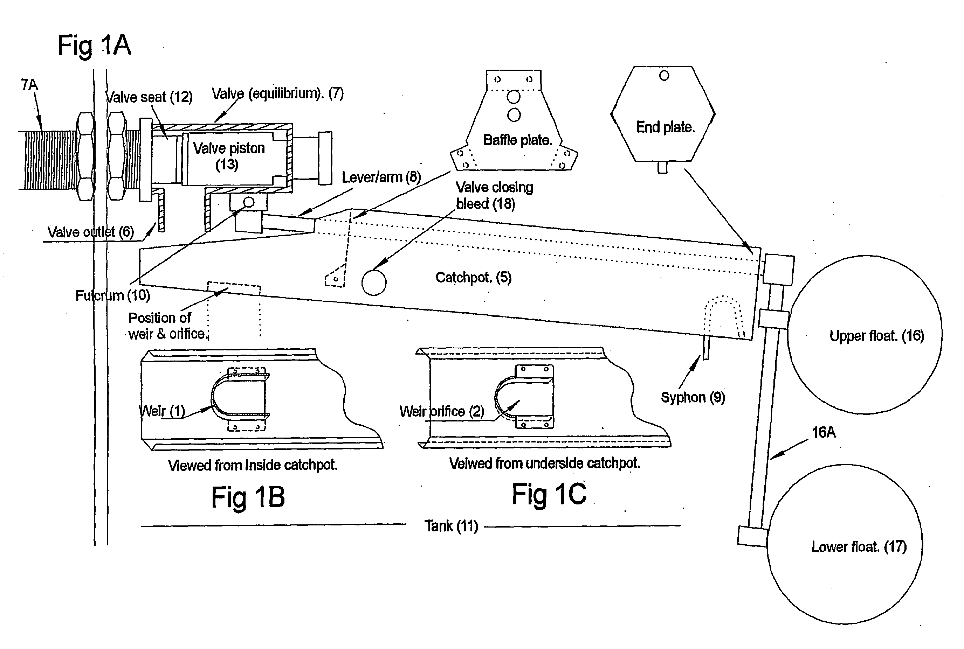

Referring to the drawings and initially to Figures 1A to 1C, an equilibrium valve 7, to which there is mounted a float lever arm 8, includes an integral catchpot 5 secured along its length and a pair of buoyancy floats 16, 17 secured on a support rod 16A. The lever arm 8 is attached to the valve 7 at an actuating fulcrum 10 which moves a valve piston 13 to open and close flow from the valve discharge outlet 6 with the fall and rise of the lever arm 8 under the influence of the floats 16, 17.

The valve 7 is secured to the wall of the container vessel or tank 11 and when opened allows the liquid (usually water) supplied under pressure via a supply pipe 7A to be released through the valve outlet 6.

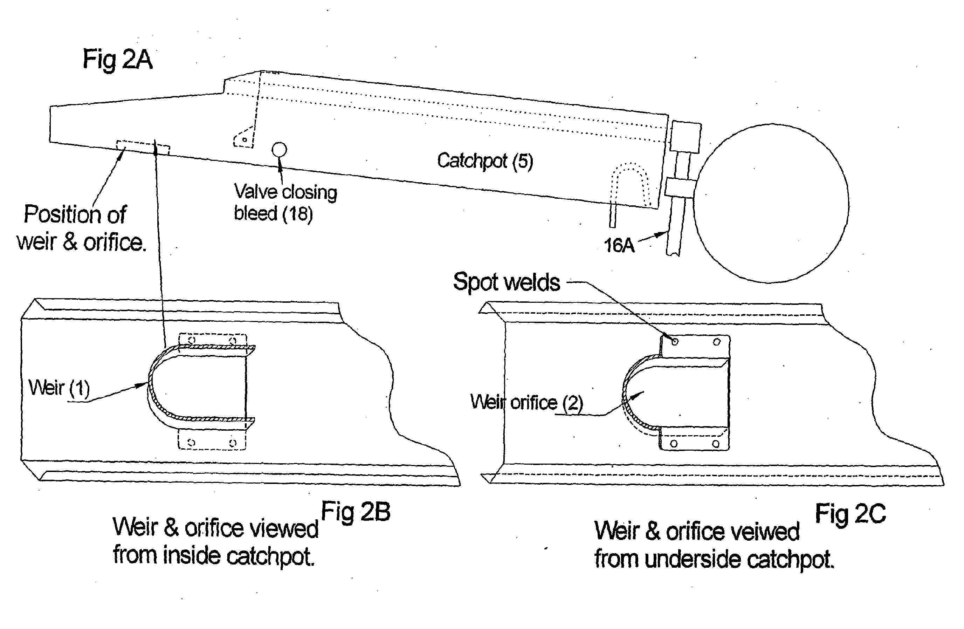

In the "valve closed" position illustrated in Figure 1A, the valve outlet 6 is misaligned with a draining orifice 2 provided in the base of the catchpot which extends below the valve outlet such that water falling onto the catchpot when the valve is partially opened runs down the base of the catchpot into a liquid collection portion thereof and not down through the orifice 2. A weir 1 extends around the upstream end of the orifice 2, as illustrated in Figures 1B and 1C. After a quantity of liquid has been drawn off from the tank 11, the floats fall in the direction of arrow 14 carrying the lever arm downwardly. The valve 7 partially opens and water tickles down from the valve seat 12 and centrally into the outlet 6. This water fall directly into the catchpot 5 upstream of the draining orifice 2 at a point furthest away from the floats 16, 17. The weir 1 diverts the water flowing under gravity, past the orifice 2 into the lower end of the catchpot 5, where the liquid is retained. As illustrated in Figures 2A to 2C, the weir 1 is shaped so that when water is flowing out of the liquid collection portion of the catchpot 5, a significant amount of the water will flow directly into the draining orifice 2.

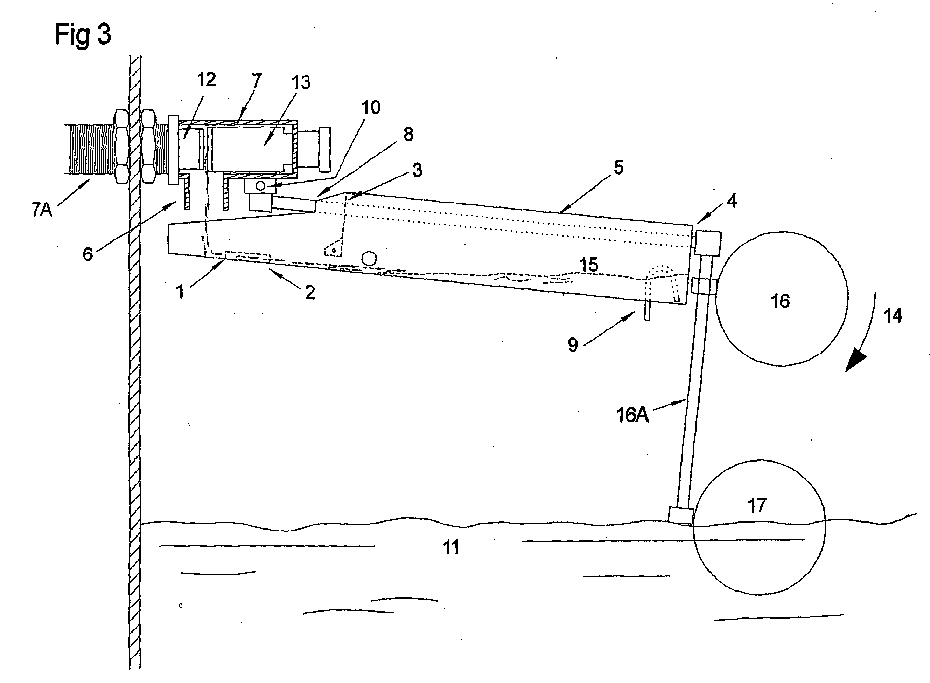

Referring now to Figure 3, when an amount of water has been drawn from the tank 11 there is an initial delay in the opening of the valve 7 as the buoyancy effect of the lower float 17 retains the lever arm 8 in a "valve closed" position until the level has dropped sufficiently to justify a refill cycle. As the water is drawn off the tank 11, the lever arm 8 eventually falls in the direction of arrow 14, partially opening the valve 7.

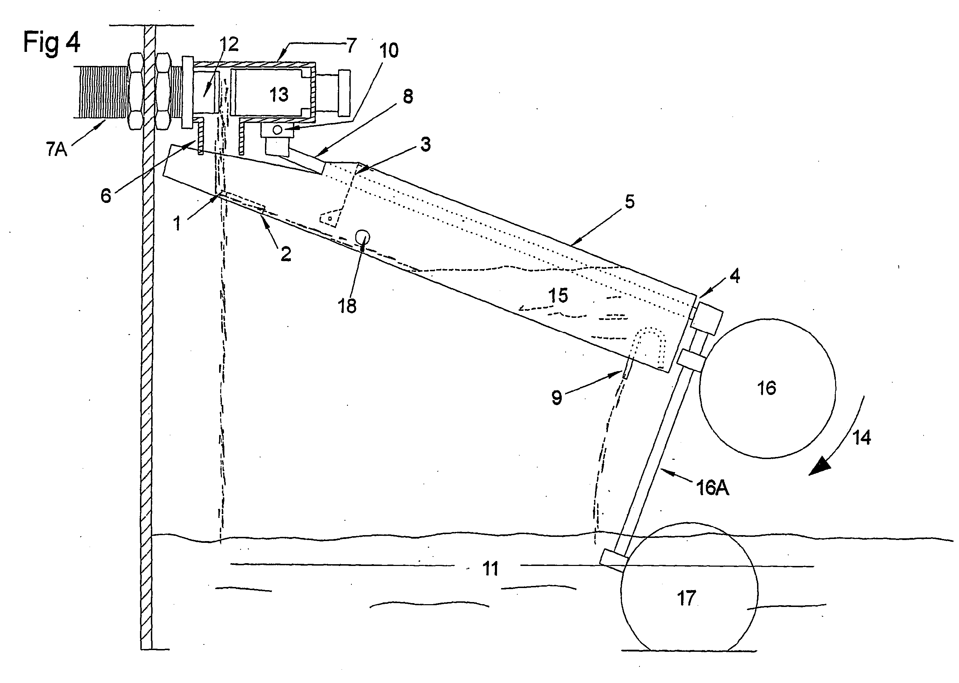

Water is then discharged at a trickle down the centre of the valve outlet 6 into the region of the catchpot 5 which extends below the discharge outlet. The weir 1 diverts this water around the draining orifice 2 into the collection portion of the catchpot where it is retained. The increasing weight of the water in the catchpot forces the arm 8 to fall further, thus opening the valve 7 more, as shown in Figure 4.

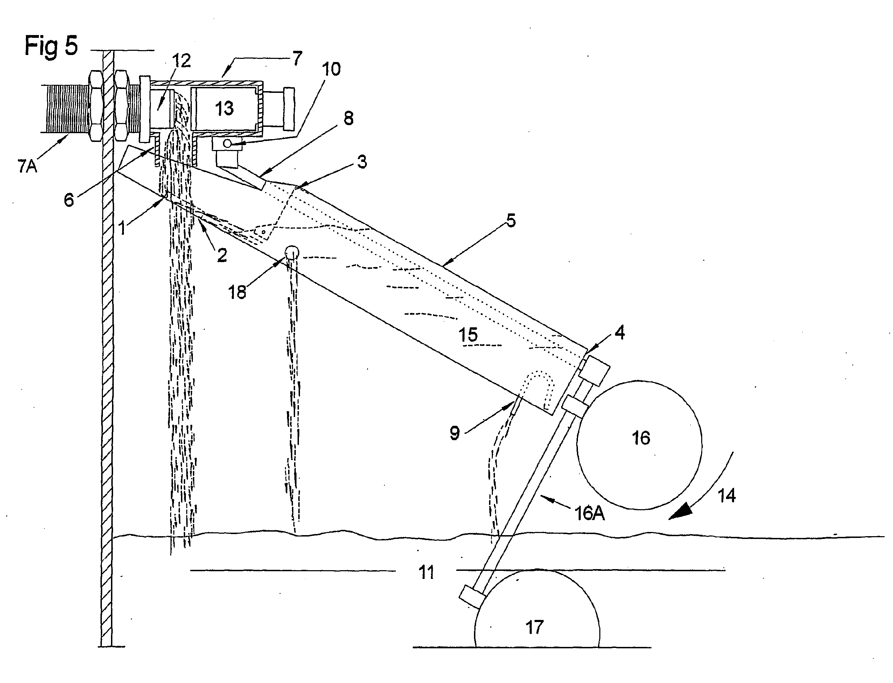

The pivoting movement of the catchpot in the direction of arrow 14 will, by its action, move the draining orifice into alignment with the valve outlet 6, away from the fulcrum 10. This will allow some of the incoming water to fall through the orifice into the tank 11 but the remaining water continues to be directed into the catchpot 5. The siphon tube 9 at this stage has started to discharge some of the retained water into the tank 11. Figure 5 shows the catchpot 5 continuing to fill to the stage where it reaches its maximum capacity and bleed openings 18 in the catchpot side walls now also discharge liquid into the tank. The catchpot is now full of liquid and the lower float 17 is unable to support the weight and sinks under the liquid, allowing the arm 8 to fall to its maximum extent in the direction of arrow 14, fully opening the valve 7. The orifice is now positioned directly below the discharge outlet 6 and the water flows directly into the tank 11 with only a small quantity flowing into the now full catchpot 5. This small quantity replaces the water being discharged into the tank by the siphon 9 and the bleed openings 18.

Figure 5 shows the arm falling further in the direction of arrow 14. Valve 7 consequently opens further and the draining orifice 2 swings partially under valve outlet 6. Some of the water now trickles through the orifice 2 and into the tank 11 but the remainder is still diverted into the catchpot 5 by the weir 1.

The liquid now filling the catchpot 5 which decreases its buoyancy causing the lower float 17 to sink below the water in the tank 11, so that the siphon tube 9 starts to discharge water into the tank 11.

In Figure 5, the catchpot 5 is almost full of water, the arm 8 is at its maximum travel in the direction of arrow 14, the orifice 2 is now positioned directly below the valve outlet 6 and the valve 7 is fully open and discharging at maximum flow.

The main body of liquid discharging from the valve 6 passes through the orifice 2 directly into tank 11 but some is still diverted by the weir 1 into the catchpot 5 which rapidly fills to the level of the bleed openings 18. Water from the upper part of the catchpot 5 is now discharging into tank 11 concurrently with the action of the siphon 9. The lower float 17 is now fully submerged and the level of water in the tank 11 begins to rise.

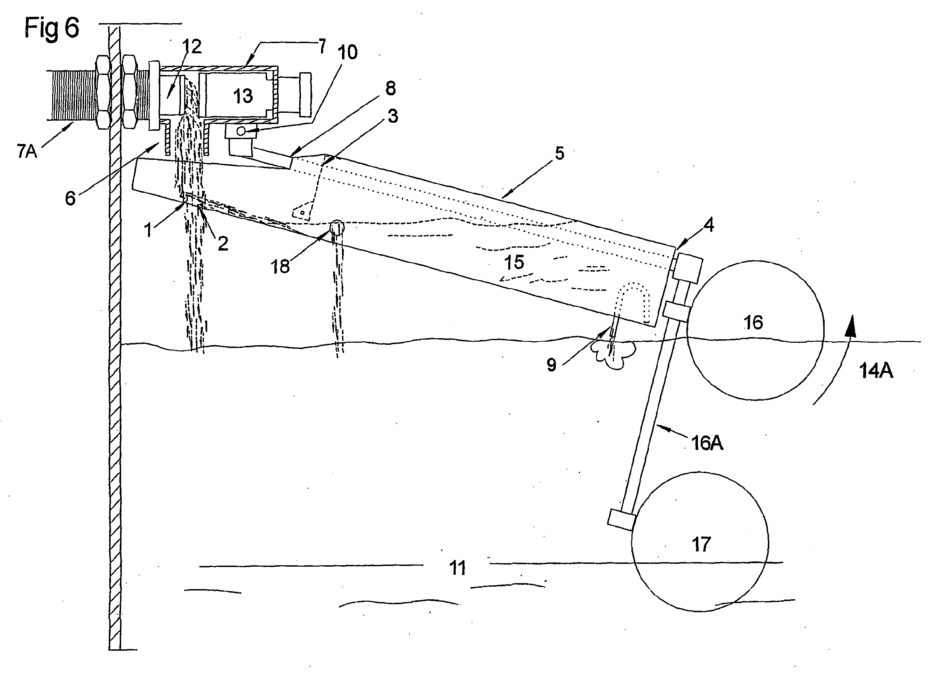

In Figure 6, the water level in the tank has risen to a level where the upper float 16 is half-submerged and the lever arm 8 is being lifted in the direction of arrow 14A. The lower float 17 remains burdened by the weight of the full catchpot 5 and remains beneath the surface of the water. As the lever arm 8 is deflected upwardly, the valve partially closes but remain substantially open. The orifice 2 begins to move out of alignment with the valve outlet 6 and the tank 11 approaches near to full. As the arm 8 rises further , the valve 7 partially closes and water discharges at a lesser rate, however, flow from the bleed openings 18 and the siphon tube 9 continues to direct water from the catchpot 5 into the tank 11.

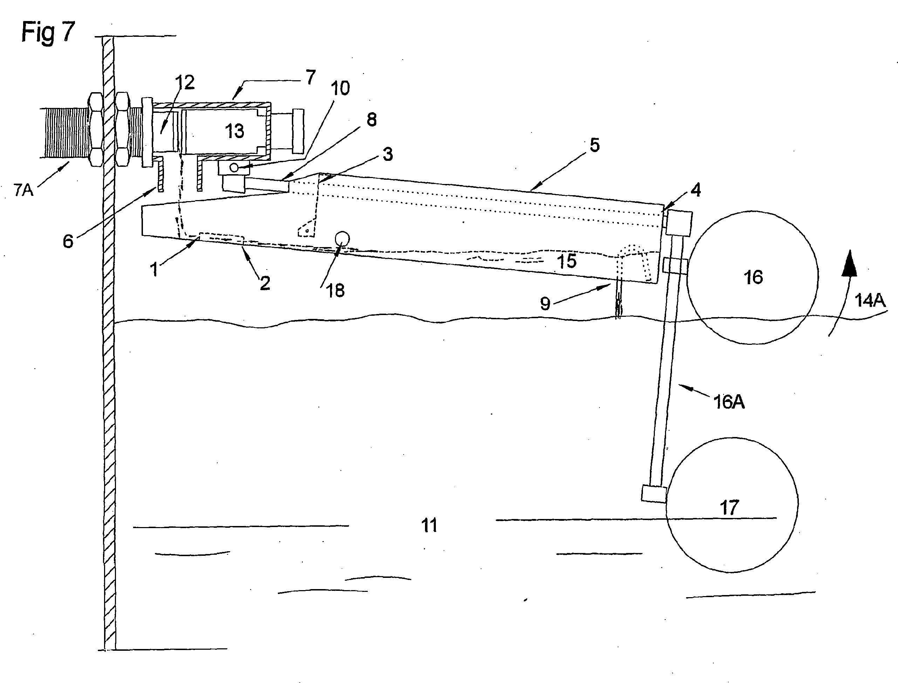

In Figure 7, the tank 11 is now virtually full, the valve 7 is almost shut and the flow therefrom reduced to a trickle. Lever arm 8 continues to lift in the direction of arrow 14A and the orifice 2 swings further out of alignment with the valve outlet 6. Water flow is reduced to a trickle and is diverted by the weir 1 into the catchpot 5. The flow of water now stops discharging into the tank through the orifice 2 and by this time the flow from the valve outlet 6 into the catchpot 5 under gravity is less than the amount being discharged into the tank 11 via the siphon 9 and bleed openings 18. The catchpot 5 will quickly empty thereby reducing the burden upon the floats 16,17 which will quickly rise shutting the valve. The water continues to flow through the siphon 9 and the level of water in the catchpot 5 drops below the level of the bleed openings 18.

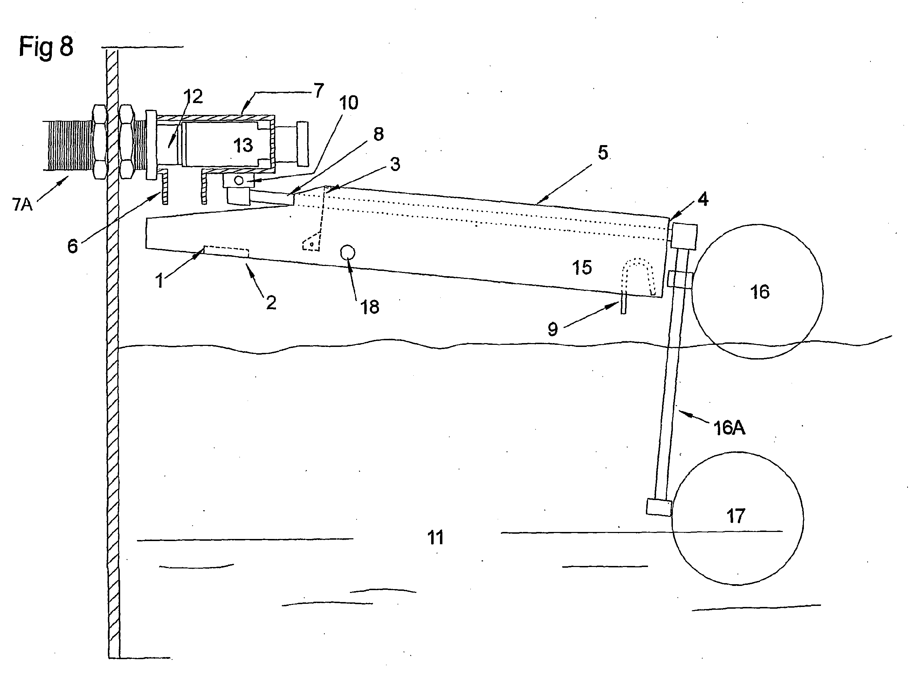

As will be seen from Figure 8, the tank 11 is full, the siphon tube 9 has finished draining the catchpot 5, the valve 7 is fully closed and the upper float 16 has risen high on the liquid, forcing the valve into its fully closed state.

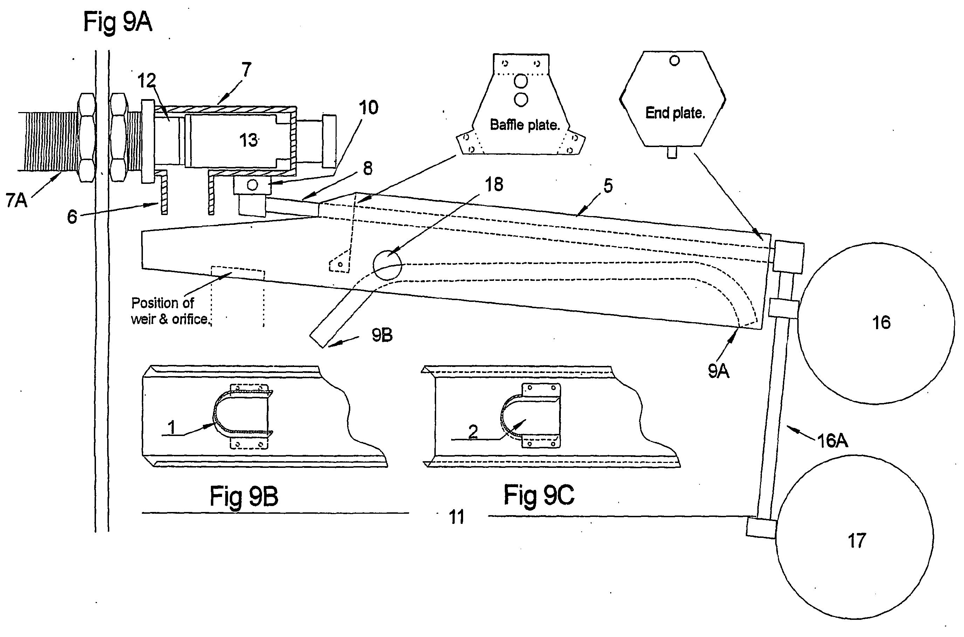

Figure 9 shows an identical regulator system having a modified siphon tube 9A which extends from the water collection portion or float end of the catchpot to just beyond the or each bleed opening 18 where the siphon tube passes through the base of the catchpot to terminate at its free end 9B. The advantage of the modified siphon is that when the catchpot rises from its fully inclined state as illustrated in Figure 5, the tube 9A will fill with liquid from that inside the catchpot, from its lower end upwards, and all air will be purged from the tube before the protruding end 9B becomes submerged in the rising liquid in the tank. The siphon is therefore self purging and a larger diameter tube that employed than can be used for the U-shaped siphon tube at 9 in Figures 1A to 8.

It is to be noted that more than one siphon tube 9,9A and more than one bleed opening 18 can be employed to increase the rate of water discharge from of the catchpot in larger installations.

It will be appreciated by the skilled addressee that the terms "tank", "vessel" and "container" are not intended to be limiting and that any suitable liquid may be handled by a valve regulator of the present invention, although it is most commonly applied to water in domestic, industrial and civil installations.

It will of course be understood that the invention is not limited to the specific details described herein, which are given by way of example only, and that various modifications and alterations are possible within the scope of the appended claims.

## Claims

1. A float valve regulator which is opened and closed by the movement of an float means (16,17) secured at one end of a lever arm (8), the float means rising and falling in use with the level of liquid in a container into which a supply of liquid is controlled by the valve (7) having a discharge outlet (6) which directs incoming liquid into a catchpot (5) mounted along the length of or otherwise forming part of said lever arm, the catchpot including a region which extends below the discharge outlet of the valve so that at least a portion of incoming liquid is directed into the catchpot to more rapidly open said valve and said catchpot includes draining means (2,9,18) so that liquid retained therein can escape allowing the float means to move more rapidly to shut the valve securely when filling is complete, wherein the region of the catchpot extending below the discharge outlet includes an orifice (2), which aligns with the outlet when the float means falls sufficiently to commence valve opening but which moves increasingly out of alignment with the discharge outlet as the float means rises as the liquid level in the container rises.

2. A float valve regulator as claimed in Claim 1, in which the catchpot includes a siphon element (9) positioned in a liquid collection portion thereof so that a siphon is established as the catchpot is carried to a particular angular position with the lever arm by the rise and fall of the float means, such that once established the siphon serves to extract liquid retained within the catchpot and allow it to flow into the container, thereby further raising the level of liquid in the container, lightening the catchpot and lever arm assembly and allowing the increased buoyancy effect of the float means to more rapidly and firmly close the valve.

3. A float valve regulator as claimed in Claim 1 or Claim 2, in which the catchpot draining means comprises an orifice (2) having a weir element (1) disposed around at least part of the orifice which in use prevents incoming liquid falling adjacent the orifice from flowing directly therethrough and instead diverts a substantial proportion of such liquid into the liquid collection portion of the catchpot.

4. A float valve regulator as claimed in any one of Claims 1 to 3 in which the liquid collection portion of the catchpot includes one or more openings (18) in at least one side wall of the catchpot through which liquid can escape, thereby setting a limit to the capacity of retained liquid therein.

5. A float valve regulator as claimed in any one of the preceding claims, in which the lever arm carries a float means comprising two buoyancy floats disposed in a substantially vertically spaced apart arrangement.

6. A float valve regulator as claimed in Claim 5, in which the float means is arranged so that, when the catchpot body is empty and the container is full, an upper buoyancy float (16) is located at an upper liquid level and a lower buoyancy float (17) is wholly submerged, whereby when the liquid level starts to drop the buoyancy of the upper and lower floats keeps the lever arm in a "valve closed" position for a predetermined interval until the level in the container is such that the lever arm drops and the valve opens, causing the catchpot to fill and forcing the lever arm downwardly to overcome the buoyancy effect of the lower float and open the valve yet further to fill the container.

7. A float valve regulator as claimed in Claim 5 or Claim 6, in which the two floats are mounted on a support (16A) which extends generally perpendicularly from the end of the float arm and remote from the end thereof which is pivotally attached to or adjacent the valve or a valve body.

8. A float valve regulator as claimed in any one of Claims 5 to 7, in which the position of at least one of the floats is adjustable relative to the lever arm.

9. A float valve regulator as claimed in any one of Claims 2 to 8, in which the siphon element comprises at least one inverted U-tube, each having one end which extends through a base portion of the catchpot.

10. A float valve regulator as claimed in any one of Claims 2 to 8, in which the catchpot extends substantially the full length of the lever arm and the siphon element has, at an end towards the valve, one end extending through a base portion of the catchpot and runs within the majority of the length of the catchpot before it bends down towards the float end of the catchpot, so as to be self-priming.

11. A float valve regulator as claimed in any one of the preceding claims, in which the catchpot includes a baffle (3) which extends substantially across and defines one end of the liquid collection portion of the catchpot, the baffle including gaps and apertures which allow liquid to flow from one side of the baffle to the other but preventing a surge of liquid from the liquid collection portion towards the orifice as the buoyancy effect of the float means overcomes the weight of liquid retained therein as the catchpot rises quickly after the siphoning action begins to extract liquid therefrom.

12. A float valve regulator as claimed in any one of the preceding claims, which includes a catchpot attachable to a float carrying lever arm of a downwardly discharging float-controlled equilibrium valve, the catchpot including an orifice in a region thereof which aligns with a discharge outlet of the valve when the lever arm has dropped to a level at which the valve will open but which moves increasingly out of alignment with the outlet as the lever arm rises towards a "valve closed" position, and which also includes a siphon tube having one end within the catchpot and remote from said orifice to establish a siphon to empty the catchpot when the lever arm approaches said "valve closed" position.

## Patentansprüche

1. Schwimmerventilregler, der durch die Bewegung einer an einem Ende eines Hebelarms (8) befestigten Schwimmereinrichtung (16, 17) geöffnet und geschlossen wird, wobei die Schwimmereinrichtung beim Gebrauch mit dem Füllstand einer Flüssigkeit in einem Behälter steigt und sinkt, dessen Flüssigkeitszufuhr durch das Ventil (7) geregelt wird, das über eine Abflussöffnung (6) verfügt, welche eingeleitete Flüssigkeit in einen Auffangbehälter (5) leitet, der entlang der Länge des Hebelarms montiert ist oder anderweitig dessen Bestandteil bildet, wobei der Auffangbehälter eine Region enthält, die sich unter der Abflussöffnung des Ventils erstreckt, so dass mindestens ein Teil der eingeleiteten Flüssigkeit in den Auffangbehälter geleitet wird, um das Ventil schneller zu öffnen, und wobei der Auffangbehälter eine Entleerungseinrichtung (2, 9, 18) enthält, so dass die darin zurückgehaltene Flüssigkeit entweichen kann, was der Schwimmereinrichtung ermöglicht, sich schneller zu bewegen, um das Ventil sicher zu verschließen, wenn der Füllvorgang abgeschlossen ist, wobei die Region des Auffangbehälters, die sich unter der Abflussöffnung erstreckt, eine Mündung (2) enthält, die an der Abflussöffnung ausgerichtet ist, wenn die Schwimmereinrichtung ausreichend sinkt, um das Öffnen des Ventils einzuleiten, die sich aber zunehmend aus der Ausrichtung an der Abflussöffnung heraus bewegt, wenn die Schwimmereinrichtung mit steigendem Füllstand der Flüssigkeit in dem Behälter steigt.

2. Schwimmerventilregler gemäß Anspruch 1, wobei der Auffangbehälter ein Siphonelement (9) enthält, das in einem Flüssigkeitssammelabschnitt von diesem positioniert ist, so dass ein Siphon gebildet wird, wenn der Auffangbehälter durch das Steigen und Sinken der Schwimmereinrichtung in eine bestimmte Winkelposition zum Hebelarm gebracht wird, so dass der Siphon nach seiner Bildung dazu dient, im Auffangbehälter zurückgehaltene Flüssigkeit abzuziehen und sie in den Behälter fließen zu lassen, wodurch der Füllstand der Flüssigkeit in dem Behälter weiter ansteigt, die Baugruppe aus Auffangbehälter und Hebelarm erleichtert wird und durch die erhöhte Auftriebswirkung der Schwimmereinrichtung ein schnelleres und festeres Schließen des Ventils ermöglicht wird.

3. Schwimmerventilregler gemäß Anspruch 1 oder Anspruch 2, wobei die Entleerungseinrichtung des Auffangbehälters eine Mündung (2) enthält, die über ein Überlaufelement (1) verfügt, das um mindestens einen Teil der Mündung angeordnet ist und das im Gebrauch verhindert, dass eingeleitete Flüssigkeit, die neben der Mündung auftrifft, direkt durch diese fließen kann, und stattdessen einen erheblichen Anteil dieser Flüssigkeit in den Flüssigkeitssammelabschnitt des Auffangbehälters umleitet.

4. Schwimmerventilregler gemäß einem der Ansprüche 1 bis 3, wobei der Flüssigkeitssammelabschnitt des Auffangbehälters eine oder mehrere Öffnungen (18) in mindestens einer Seitenwand des Auffangbehälters enthält, durch welche Flüssigkeit entweichen kann, wodurch ein Grenzwert für die Kapazität der darin zurückgehaltenen Flüssigkeit festgelegt wird.

5. Schwimmerventilregler gemäß einem der vorherigen Ansprüche, wobei der Hebelarm eine Schwimmereinrichtung trägt, die zwei Auftriebsschwimmerkörper umfasst, welche in einer Anordnung mit beträchtlichem Vertikalabstand zueinander positioniert sind.

6. Schwimmerventilregler gemäß Anspruch 5, wobei die Schwimmereinrichtung so angeordnet ist, dass bei leerem Auffangbehälterkörper und vollem Behälter sich ein oberer Auftriebsschwimmerkörper (16) bei einem oberen Flüssigkeitsfüllstand befindet und ein unterer Auftriebsschwimmerkörper (17) vollständig untergetaucht ist, wodurch beim Beginn des Sinken des Flüssigkeitsfüllstands der Auftrieb der oberen und unteren Schwimmerkörper den Hebelarm für ein vorgegebenes Intervall in einer "Ventil geschlossen"-Position hält, bis ein solcher Füllstand in dem Behälter erreicht ist, dass der Hebelarm fällt und das Ventil geöffnet wird, was die Befüllung des Auffangbehälters bewirkt und den Hebelarm nach unten zwingt, um die Auftriebswirkung des unteren Schwimmerkörpers zu überwinden und das Ventil noch weiter zu öffnen, um den Behälter zu füllen.

7. Schwimmerventilregler gemäß Anspruch 5 oder Anspruch 6, wobei die beiden Schwimmerkörper an einer Halterung (16A) befestigt sind, die im Wesentlichen senkrecht vom Ende des Schwimmerarms ausgehend und entfernt von dessen Ende verläuft, das schwenkbar an oder neben dem Ventil oder einem Ventilgehäuse befestigt ist.

8. Schwimmerventilregler gemäß einem der Ansprüche 5 bis 7, wobei die Position von mindestens einem der Schwimmerkörper im Verhältnis zum Hebelarm einstellbar ist.

9. Schwimmerventilregler gemäß einem der Ansprüche 2 bis 8, wobei das Siphonelement mindestens ein umgekehrtes U-Rohr umfasst, von denen jedes ein Ende hat, das durch einen Basisabschnitt des Auffangbehälters verläuft.

10. Schwimmerventilregler gemäß einem der Ansprüche 2 bis 8, wobei sich der Auffangbehälter im Wesentlichen über die gesamte Länge des Hebelarms erstreckt und das Siphonelement an einem Ende, das zum Ventil weist, ein Ende hat, das durch einen Basisabschnitt des Auffangbehälters verläuft und innerhalb des Großteils der Länge des Auffangbehälters verläuft, bevor es nach unten in Richtung des Schwimmerkörperendes des Auffangbehälters gebogen ist, so dass es selbstansaugend ist.

11. Schwimmerventilregler gemäß einem der vorherigen Ansprüche, wobei der Auffangbehälter eine Stauscheibe (3) enthält, die im Wesentlichen quer verläuft und ein Ende des Flüssigkeitssammelabschnitts des Auffangbehälters definiert, wobei die Stauscheibe Spalte und Öffnungen enthält, die zwar das Fließen von Flüssigkeit von einer Seite der Stauscheibe zur anderen ermöglichen, aber einen Flüssigkeitsschwall aus dem Flüssigkeitssammelabschnitt zur Mündung verhindern, wenn die Auftriebswirkung der Schwimmereinrichtung das Gewicht der zurückgehaltenen Flüssigkeit übersteigt, wenn der Auffangbehälter schnell steigt, nachdem die Siphonwirkung beginnt, Flüssigkeit daraus abzuziehen.

12. Schwimmerventilregler gemäß einem der vorherigen Ansprüche, der einen Auffangbehälter enthält, der an einem Hebelarm zum Tragen von Schwimmerkörpern eines schwimmergeregelten Gleichgewichtsventils mit Abfluss nach unten befestigt werden kann, wobei der Auffangbehälter in einer Region eine Mündung enthält, die an einer Abflussöffnung des Ventils ausgerichtet ist, wenn der Hebelarm auf einen Füllstand gesunken ist, bei dem das Ventil geöffnet wird, der sich aber zunehmend aus der Ausrichtung an der Abflussöffnung heraus bewegt, wenn der Hebelarm in Richtung einer "Ventil geschlossen"-Position steigt, und der außerdem ein Siphonrohr enthält, dessen eines Ende innerhalb des Auffangbehälters und entfernt von der Mündung liegt, um einen Siphon zum Leeren des Auffangbehälters zu bilden, wenn sich der Hebelarm der "Ventil geschlossen"-Position nähert.

## Revendications

1. Un régulateur de robinet à flotteur qui est ouvert et fermé par le déplacement d'un moyen à flotteur (16, 17) assujetti à une extrémité d'un bras de levier (8), le moyen à flotteur montant et descendant lors de l'utilisation avec le niveau de liquide dans un contenant dans lequel une réserve de liquide est commandée par le robinet (7) ayant une sortie de décharge (6) qui dirige le liquide entrant dans un séparateur (5) monté le long de la longueur de ou sinon faisant intégralement partie dudit bras de levier, le séparateur comprenant une région qui s'étend au-dessous de la sortie de décharge du robinet de façon à ce qu'au moins une portion du liquide entrant soit dirigée dans le séparateur pour ouvrir plus rapidement ledit robinet et ledit séparateur comprend un moyen d'évacuation (2, 9, 18) de sorte que le liquide retenu à l'intérieur puisse s'échapper en permettant au moyen à flotteur de se déplacer plus rapidement pour fermer le robinet de façon sûre quand le remplissage est terminé, où la région du séparateur s'étendant au-dessous de la sortie de décharge comprend un orifice (2), qui s'aligne avec la sortie quand le moyen à flotteur descend suffisamment pour commencer l'ouverture du robinet mais qui se déplace de plus en plus hors d'alignement avec la sortie de décharge quand le moyen à flotteur monte à mesure que le niveau du liquide dans le contenant monte.

2. Un régulateur de robinet à flotteur tel que revendiqué dans la revendication 1, dans lequel le séparateur comprend un élément de siphon (9) positionné dans une portion de collecte de liquide de ce dernier de sorte qu'un siphon soit établi à mesure que le séparateur est amené dans une position angulaire particulière par rapport au bras de levier par la montée et la descente du moyen à flotteur, de telle sorte qu'une fois établi le siphon serve à extraire le liquide retenu à l'intérieur du séparateur et à lui permettre de couler dans le contenant, faisant ainsi monter encore plus le niveau du liquide dans le contenant, allégeant l'assemblage de séparateur et de bras de levier et permettant à l'effet de poussée accru du moyen à flotteur de fermer plus rapidement et plus fermement le robinet.

3. Un régulateur de robinet à flotteur tel que revendiqué dans la revendication 1 ou la revendication 2, dans lequel le moyen d'évacuation de séparateur comporte un orifice (2) ayant un élément de déversoir (1) disposé autour d'au moins une partie de l'orifice qui lors de l'utilisation empêche le liquide entrant tombant à proximité de l'orifice de couler directement à travers ce dernier et au lieu de cela dévie une portion substantielle d'un liquide de la sorte dans la portion de collecte de liquide du séparateur.

4. Un régulateur de robinet à flotteur tel que revendiqué dans n'importe laquelle des revendications 1 à 3 dans lequel la portion de collecte de liquide du séparateur comprend une ou plusieurs ouverture(s) (18) dans au moins une paroi latérale du séparateur à travers laquelle/lesquelles du liquide peut s'échapper, fixant ainsi une limite à la capacité du liquide retenu à l'intérieur.

5. Un régulateur de robinet à flotteur tel que revendiqué dans n'importe laquelle des revendications précédentes, dans lequel le bras de levier porte un moyen à flotteur comportant deux flotteurs de poussée disposés dans un agencement substantiellement espacé de façon verticale.

6. Un régulateur de robinet à flotteur tel que revendiqué dans la revendication 5, dans lequel le moyen à flotteur est agencé de sorte que, lorsque le corps de séparateur est vide et que le contenant est plein, un flotteur de poussée supérieur (16) est situé à un niveau de liquide supérieur et un flotteur de poussée inférieur (17) est entièrement submergé, grâce à quoi quand le niveau de liquide commence à baisser la poussée des flotteurs supérieur et inférieur garde le bras de levier dans une position « robinet fermé » pendant un intervalle prédéterminé jusqu'à ce que le niveau dans le contenant soit tel que le bras de levier se baisse et que le robinet s'ouvre, amenant le séparateur à se remplir et forçant le bras de levier vers le bas pour surmonter l'effet de poussée du flotteur inférieur et ouvrir le robinet encore plus pour remplir le contenant.

7. Un régulateur de robinet à flotteur tel que revendiqué dans la revendication 5 ou la revendication 6, dans lequel les deux flotteurs sont montés sur un support (16A) qui s'étend de façon généralement perpendiculaire par rapport à l'extrémité du bras de flotteur et en s'éloignant de l'extrémité de ce dernier qui est assujetti à, de façon à pouvoir pivoter, ou adjacent au, robinet ou corps de robinet.

8. Un régulateur de robinet à flotteur tel que revendiqué dans n'importe laquelle des revendications 5 à 7, dans lequel la position d'au moins un des flotteurs est ajustable relativement au bras de levier.

9. Un régulateur de robinet à flotteur tel que revendiqué dans n'importe laquelle des revendications 2 à 8, dans lequel l'élément de siphon comporte au moins un tube en U renversé, ayant chacun une extrémité qui s'étend à travers une portion de base du séparateur.

10. Un régulateur de robinet à flotteur tel que revendiqué dans n'importe laquelle des revendications 2 à 8, dans lequel le séparateur s'étend substantiellement le long de toute la longueur du bras de levier et l'élément de siphon a, à une extrémité vers le robinet, une extrémité s'étendant à travers une portion de base du séparateur et continue à l'intérieur de la majorité de la longueur du séparateur avant de se courber vers le bas vers l'extrémité de flotteur du séparateur, de façon à être auto-amorçable.

11. Un régulateur de robinet à flotteur tel que revendiqué dans n'importe laquelle des revendications précédentes, dans lequel le séparateur comprend une chicane (3) qui s'étend substantiellement d'un bout à l'autre et définit une extrémité de la portion de collecte de liquide du séparateur, la chicane comprenant des interstices et des ouvertures qui permettent au liquide de couler d'un côté de la chicane à l'autre mais en empêchant une montée soudaine de liquide de la portion de collecte de liquide vers l'orifice car l'effet de poussée du moyen à flotteur surmonte le poids du liquide retenu à l'intérieur à mesure que le séparateur monte rapidement après que l'action de siphonnage a commencé à extraire le liquide de cette dernière.

12. Un régulateur de robinet à flotteur tel que revendiqué dans n'importe laquelle des revendications précédentes, qui comprend un séparateur pouvant être assujetti à un bras de levier portant un flotteur d'un robinet d'équilibrage commandé par un flotteur de déchargement vers le bas, le séparateur comprenant un orifice dans une région de ce dernier qui s'aligne avec une sortie de décharge du robinet quand le bras de levier est descendu à un niveau auquel le robinet s'ouvrira mais qui se déplace de plus en plus hors d'alignement avec la sortie à mesure que le bras de levier monte vers une position « robinet fermé », et qui comprend également un tube de siphon ayant une extrémité à l'intérieur du séparateur et distante dudit orifice pour établir un siphon afin de vider le séparateur quand le bras de levier approche de ladite position « robinet fermé ».
